# EUROPÄISCHE PATENTANMELDUNG

(11) **EP 4 329 083 A1**
(43) Veröffentlichungstag der Anmeldung: **28.02.2024**
(21) Anmeldenummer: 22192220.6
(22) Anmeldetag: 25.08.2022
(51) Int. Cl.: H01M 50/533, H01M 10/04, H01M 50/109, H01M 50/153, H01M 50/169, H01M 50/536, H01M 50/538, H01M 50/545, H01M 50/566, H01M 4/64

(54) **ELEKTROCHEMISCHE ENERGIESPEICHERZELLE UND VERFAHREN ZUR HERSTELLUNG**

(71) Anmelder: VARTA Microbattery GmbH, 73479 Ellwangen Jagst (DE)
(72) Erfinder: Gaugler, Winfried, 73479 Ellwangen (DE); Maas, Wolfgang, 73494 Rosenberg (DE)
(74) Vertreter: Ostertag & Partner Patentanwälte mbB

(57) **Zusammenfassung**

Eine elektrochemische Energiespeicherzelle (100) umfasst ein Gehäuse mit einem umlaufenden Gehäusemantel sowie einem ersten und einem zweiten Gehäuseboden (110, 120). In dem Gehäuse ist ein zylindrischer Elektroden-Separator-Verbund (150) mit mindestens einer bandförmigen negativen Elektrode (151) und mindestens einer bandförmigen positiven Elektrode (152) und mindestens einem bandförmigen Separator (153) vorgesehen. Die Elektroden (151, 152) umfassen jeweils einen bandförmigen metallischen Stromkollektor (171, 172), der vorzugsweise beidseitig mit einem Elektrodenmaterial (181, 182) beschichtet ist. Bei dem Elektroden-Separator-Verbund (150) handelt es sich um einen Wickel, in dem die Elektroden (151, 152) und der mindestens eine Separator (153) spiralförmig aufgewickelt vorliegen. Der zylindrische Elektroden-Separator-Verbund (150) umfasst eine erste Wickelstirnseite und eine zweite Wickelstirnseite und einen umlaufenden Mantel. Der zylindrische Elektroden-Separator-Verbund (150) ist in dem Gehäuse axial ausgerichtet, so dass die Wickelstirnseiten in Richtung der Gehäuseböden (110, 120) weisen. Die elektrochemische Energiespeicherzelle ist weiter dadurch gekennzeichnet, dass sie mindestens zwei metallische Ableiterstreifen (1510, 1520), die an unterschiedlichen Positionen des bandförmigen Stromkollektors (171, 172) von mindestens einer der Elektroden (151, 152) fixiert sind, umfasst. Die Ableiterstreifen (1510, 1520) einer Elektrode (151, 152) treten alle aus einer der Wickelstirnseiten aus und umfassen einen ersten Abschnitt (1511, 1521) außerhalb und einen zweiten Abschnitt innerhalb des Wickels. Die ersten Abschnitte (1511, 1521) der Ableiterstreifen sind derart abgewinkelt, dass sie flach auf der jeweiligen Wickelstirnseite aufliegen. Weiterhin sind die ersten Abschnitte (1511, 1521) der Ableiterstreifen einer Elektrode durch Verschweißung mit jeweils einem der Gehäuseböden (110, 120) verbunden, wobei die Dimensionen der Ableiterstreifen (1510, 1520) und/oder die Positionen, an denen sie an dem bandförmigen Stromkollektor fixiert sind, derart gewählt sind, dass die auf der jeweiligen Wickelstirnseite aufliegenden ersten Abschnitte einander nicht überlappen.

## Beschreibung

Die vorliegende Erfindung betrifft eine elektrochemische Energiespeicherzelle mit mehreren Ableiterstreifen sowie ein Verfahren zu ihrer Herstellung.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten in der Regel auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, insbesondere eine metallische Folie, der als Träger für das jeweilige Aktivmaterial bzw. das entsprechende Elektrodenmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z.B. Ether und Ester der Kohlensäure).

Die Kompositelektroden können bei der Herstellung einer Lithium-Ionen-Zelle mit einem oder mehreren Separatoren zu einem Elektroden-Separator-Verbund kombiniert werden. Hierbei können die Elektroden und Separatoren unter Druck oder auch durch Lamination oder durch Verklebung miteinander verbunden werden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Beispielsweise wird eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im anderen Fällen wird zunächst eine bandförmige positive Elektrode und eine bandförmige negative Elektrode sowie mindestens ein bandförmiger Separator zu einem Elektroden-Separator-Verbund kombiniert, beispielsweise unter Anwendung des erwähnten Drucks. In einem weiteren Schritt wird der Verbund aufgewickelt und der so gebildete wickelförmige Elektroden-Separator-Verbund in ein Gehäuse eingebracht und die Elektroden entsprechend kontaktiert.

Derartige Energiespeicherzellen mit einem gewickelten Elektroden-Separator-Verbund weisen in der Regel eine zylindrische Bauform auf. Hierbei werden zylindrische Rundzellen und Knopfzellen voneinander unterschieden. Zylindrische Rundzellen zeichnen sich dadurch aus, dass ihre Höhe größer als ihr Durchmesser ist. Knopfzellen hingegen weisen eine Höhe auf, die kleiner als der Durchmesser ist. Knopfzellen werden zum Teil in sehr kleinen Bauformen angeboten. Sie eignen sich beispielsweise zur Versorgung von kleinen elektronischen Geräten wie Uhren, Hörgeräte, kabellose Kopfhörer oder Ähnlichem.

Knopfzellen weisen üblicherweise ein Gehäuse aus zwei Gehäusehalbteilen auf. Das eine Gehäusehalbteil bildet einen Zellenbecher und das andere Gehäusehalbteil bildet einen Zellendeckel. Diese Halbteile können beispielsweise aus vernickeltem Tiefziehblech als Stanzziehteile hergestellt werden. Üblicherweise ist der Zellenbecher positiv und der Gehäusedeckel negativ gepolt.

Der flüssigkeitsdichte Verschluss bei Knopfzellen erfolgt oftmals durch ein Umbördeln des Rands des Zellenbechers über den Rand des Zellendeckels in Verbindung mit einem Kunststoffring, der zwischen Zellenbecher und Zellendeckel angeordnet ist. Dieser Kunststoffring dient gleichzeitig als Dichtungselement und zur elektrischen Isolierung zwischen dem Zellenbecher und dem Zellendeckel.

Andere Knopfzellen werden gefertigt, indem der Zellenbecher und der Zellendeckel in axialer Richtung ausschließlich durch eine kraftschlüssige Verbindung zusammengehalten werden und die dementsprechend keinen umgebördelten Becherrand aufweisen. Eine derartige Knopfzelle geht beispielsweise aus der DE 10 2009 017 514 A1 hervor.

Die Kontaktierung der positiven und der negativen Elektrode mit den Gehäusehalbteilen kann derart erfolgen, dass an den Elektrodenbändern ein Ableiterstreifen angebracht wird. Der Ableiterstreifen der positiven Elektrode ragt auf einer Stirnseite des Wickels heraus und der Ableiterstreifen der negativen Elektrode ragt aus der gegenüberliegenden Stirnseite des Wickels heraus. Diese Ableiterstreifen können durch Verschweißung mit den jeweiligen Gehäusehalbteilen verbunden werden, um die Elektroden elektrisch zu kontaktieren. Eine derartige Knopfzelle geht beispielsweise aus der WO 2010/146154 A2 hervor. Nachteilig bei solchen Knopfzellen ist jedoch, dass das elektrochemische Potential nicht optimal ausgenutzt wird.

### AUFGABE UND LÖSUNG

Vor diesem Hintergrund stellt sich die Erfindung die Aufgabe, eine verbesserte elektrochemische Energiespeicherzelle bereitzustellen, die eine besonders gute elektrische Anbindung der Elektroden bei einem wickelförmigen Elektroden-Separator-Verbund ermöglicht. Diese Aufgabe wird durch eine elektrochemische Energiespeicherzelle gelöst, wie sie sich aus dem Anspruch 1 ergibt. Weiterhin wird die Aufgabe durch ein Verfahren zur Herstellung einer elektrochemischen Energiespeicherzelle gelöst. Dieses Verfahren ist Gegenstand des weiteren unabhängigen Anspruchs. Bevorzugte Ausgestaltungen der elektrochemischen Energiespeicherzelle bzw. des Herstellungsverfahrens ergeben sich aus den abhängigen Ansprüchen.

Die erfindungsgemäße elektrochemische Energiespeicherzelle zeichnet sich durch die folgenden Merkmale aus:
a. Sie umfasst ein Gehäuse mit einem umlaufenden Gehäusemantel sowie einem ersten und einem zweiten Gehäuseboden;
b. Sie umfasst in dem Gehäuse einen zylindrischen Elektroden-Separator-Verbund, umfassend mindestens eine bandförmige negative Elektrode und mindestens eine bandförmige positive Elektrode und mindestens einen bandförmigen Separator;
c. Die Elektroden umfassen jeweils einen bandförmigen metallischen Stromkollektor, der vorzugsweise beidseitig mit einem Elektrodenmaterial beschichtet ist;
d. Bei dem Elektroden-Separator-Verbund handelt es sich um einen Wickel, in dem die Elektroden und der mindestens eine Separator spiralförmig aufgewickelt vorliegen;
e. Der zylindrische Elektroden-Separator-Verbund umfasst eine erste Wickelstirnseite und eine zweite Wickelstirnseite und einen umlaufenden Mantel; und
f. Der zylindrische Elektroden-Separator-Verbund ist in dem Gehäuse axial ausgerichtet, so dass die Wickelstirnseiten in Richtung der Gehäuseböden weisen.

Erfindungsgemäß ist die Energiespeicherzelle weiterhin durch die folgenden Merkmale gekennzeichnet:
g. Sie umfasst mindestens zwei metallische Ableiterstreifen, die an unterschiedlichen Positionen des bandförmigen Stromkollektors von mindestens einer der Elektroden fixiert sind;
h. Die Ableiterstreifen einer Elektrode treten alle aus einer der Wickelstirnseiten aus und umfassen einen ersten Abschnitt außerhalb und einen zweiten Abschnitt innerhalb des Wickels;
i. Die ersten Abschnitte der Ableiterstreifen sind derart abgewinkelt, dass sie flach auf der jeweiligen Wickelstirnseite aufliegen;
j. Die ersten Abschnitte der Ableiterstreifen einer Elektrode sind durch Verschweißung mit jeweils einem der Gehäuseböden verbunden;
k. Die Dimensionen der Ableiterstreifen und/oder die Positionen, an denen sie an dem bandförmigen Stromkollektor fixiert sind, sind derart gewählt, dass die auf der jeweiligen Wickelstirnseite aufliegenden ersten Abschnitte einander nicht überlappen.

Gegenüber herkömmlichen Energiespeicherzellen und insbesondere gegenüber herkömmlichen Knopfzellen unterscheidet sich die erfindungsgemäße Energiespeicherzelle vor allem dadurch, dass zur elektrischen Anbindung von mindestens einer der Elektroden der Energiespeicherzelle mindestens zwei metallische Ableiterstreifen vorgesehen sind, die über die Länge der streifenförmigen Elektrode bzw. über die Länge des bandförmigen Stromkollektors der jeweiligen Elektrode verteilt sind und an unterschiedlichen Positionen des bandförmigen Stromkollektors fixiert sind.

Durch die zwei oder mehr metallischen Ableiterstreifen pro Elektrode wird erreicht, dass die Stromableitung optimiert wird. Durch diese erfindungsgemäße Maßnahme wird der auf die Länge der Elektrode bezogene Strompfad verkürzt. Die elektrische Kontaktierung der Elektrode an der jeweiligen Stirnseite des Gehäuses kann dadurch an mehreren Positionen erfolgen. Insgesamt wird mit dieser erfindungsgemäßen Maßnahme die Stromabnahme verbessert und damit die Leistungsfähigkeit der Energiespeicherzelle optimiert.

Gleichzeitig wird eine optimale Innenvolumenausnutzung bei der erfindungsgemäßen Energiespeicherzelle erreicht. Die einzelnen ersten Abschnitte der Ableiterstreifen, die aus der jeweiligen Wickelstirnseite herausragen, liegen flach auf der jeweiligen Wickelstirnseite auf und überlappen einander nicht. Die ersten Abschnitte der Ableiterstreifen bilden dabei vorzugsweise eine einlagige Schicht auf der Wickelstirnseite, so dass der Gehäuseboden, an den diese Abschnitte der Ableiterstreifen angeschweißt sind, platzsparend aufliegen kann, ohne dass es zur Ausbildung von ungenutzten Hohlräumen innerhalb der Energiespeicherzelle kommt.

Dadurch, dass die ersten Abschnitte der Ableiterstreifen an der jeweiligen Wickelstirnseite einander nicht überlappen, werden darüber hinaus Kurzschlüsse vermieden. Weiterhin eignet sich diese Anordnung der ersten Abschnitte der Ableiterstreifen in besonders geeigneter Weise für eine Verschweißung der Ableiterstreifenabschnitte mit dem jeweiligen Gehäuseboden von außen, wie es weiter unten noch näher erläutert werden wird.

Bei den Ableiterstreifen handelt es sich in bevorzugter Weise um Metallfolienstreifen, insbesondere um bandförmige Metallfolienstreifen. Bevorzugte Materialien hierfür sind Aluminium, Nickel und/oder Kupfer oder entsprechende Legierungen. Beispielsweise können die Ableiter für die positive Elektrode aus Aluminium oder einer Aluminiumlegierung bestehen. Die Ableiterstreifen für die negative Elektrode können beispielsweise aus Nickel oder Kupfer oder entsprechenden Legierungen bestehen.

Die Dicke der Ableiterstreifen und insbesondere die Dicke dieser Metallfolien kann sich beispielsweise in einem Bereich zwischen 1 µm und 100 µm bewegen, vorzugsweise 5 µm bis 100 µm. Die geringe Dicke der Ableiterstreifen hat den besonderen Vorteil, dass dadurch die an den Wickelstirnseiten aufliegenden ersten Abschnitte der Ableiterstreifen nur wenig Volumen einnehmen und es daher nicht zu maßgeblichen Innenvolumenverlusten bei der erfindungsgemäßen Energiespeicherzelle kommt.

Bei dem Gehäuse der Energiespeicherzelle handelt es sich zweckmäßigerweise um ein metallisches Gehäuse, wie es an sich für derartige Energiespeicherzellen bekannt ist. Beispielsweise kann es sich um ein metallisches Gehäuse mit einem Gehäusebecher und einem Gehäusedeckel handeln, wie es an sich für zylindrische Rundzellen bekannt ist. In anderen, besonders bevorzugten Ausführungsformen handelt es sich um ein metallisches Gehäuse, das durch zwei becherförmige Gehäusehalbteile gebildet wird, die ineinandergeschoben werden, wie es an sich für Knopfzellen bekannt ist.

Die Dimensionen der Ableiterstreifen gemäß dem vorgenannten Merkmal k. beziehen sich insbesondere auf die Länge und Breite der Ableiterstreifen und insbesondere auf die Länge und Breite der ersten Abschnitte der Ableiterstreifen, die aus der jeweiligen Wickelstirnseite herausragen. Die Länge und Breite dieser Abschnitte der Ableiterstreifen wird zweckmäßigerweise so gewählt, dass die Abschnitte nach ihrer Abwinklung derart auf der Wickelstirnseite aufliegen, dass sie nicht übereinanderliegen und sich nicht berühren. Im Zuge der Herstellung der erfindungsgemäßen Energiespeicherzelle kann es auch vorgesehen sein, dass die Länge der aus der jeweiligen Wickelstirnseite herausragenden ersten Abschnitte der Ableiterstreifen nachträglich entsprechend gekürzt werden.

Die Positionen der Ableiterstreifen bezogen auf die Länge des jeweiligen Elektrodenbandes werden vorzugsweise so gewählt, dass die einzelnen Ableiterstreifen möglichst weit voneinander entfernt sind.

In Bezug auf die Länge der bandförmigen Elektrode bzw. des bandförmigen Stromkollektors sind die Ableiterstreifen vorzugsweise in einem rechten Winkel in Bezug zur Länge der bandförmigen Elektrode orientiert, wobei eine Schmalseite der Ableiterstreifen (erster Abschnitt der Ableiterstreifen) den Längsrand der bandförmigen Elektrode überragt und die andere Schmalseite den gegenüberliegenden Längsrand der bandförmigen Elektrode nicht überragt und beispielsweise bündig damit abschließt. Auf diese Weise wird in sehr einfacher Weise erreicht, dass die Ableiterstreifen einer Elektrode nach der Wicklung des Elektroden-Separator-Verbunds aus nur einer der Wickelstirnseiten austreten bzw. herausragen.

In Bezug auf weitere Details der metallischen Ableiterstreifen als solche und in Bezug auf Ausführungsmöglichkeiten der Energiespeicherzelle im Hinblick auf das Gehäuse und die Ausbildung des Elektroden-Separator-Verbunds wird im Übrigen auf die WO 2010/146154 A2 verwiesen, die eine gattungsgemäße Energiespeicherzelle beschreibt und auf die hiermit Bezug genommen wird.

In besonders bevorzugten Ausführungsformen zeichnet sich die elektrochemische Energiespeicherzelle durch das folgende zusätzliche Merkmal aus:
a. Sie umfasst mindestens drei der metallische Ableiterstreifen an unterschiedlichen Positionen des bandförmigen Stromkollektors, bevorzugt drei bis acht Ableiterstreifen.

Die Anzahl der metallischen Ableiterstreifen pro Elektrode bzw. pro bandförmigem Stromkollektor kann dabei an die Länge des jeweiligen Elektrodenbands angepasst werden. Umso länger das Elektrodenband ist, umso vorteilhafter ist es, mehr als zwei oder drei metallische Ableiterstreifen vorzusehen. Bei einer Elektrodenlänge von beispielsweise 60 cm können beispielsweise drei Ableiterstreifen pro Elektrode ausreichend sein. Wenn die Elektrode länger ist, können mehr Ableiterstreifen sinnvoll sein. Prinzipiell verbessert sich die Stromableitung, wenn mehr Ableiterstreifen pro Elektrode vorgesehen sind. Auf der anderen Seite ist zu berücksichtigen, dass sich die ersten Abschnitte der Ableiterstreifen, die aus der jeweiligen Wickelstirnseite herausragen, nach deren Abwinklung nicht überlappen sollen, so dass die Anzahl der Ableiterstreifen bei einer bestimmten Größe der Elektroden-Separator-Verbunds nicht beliebig hoch gewählt werden kann.

In besonders bevorzugter Weise zeichnet sich die erfindungsgemäße Energiespeicherzelle durch mindestens eines der folgenden zusätzlichen Merkmale aus:
a. Die Länge der ersten Abschnitte der Ableiterstreifen beträgt maximal 50 %, bevorzugt maximal 25 %, des Durchmessers der Wickelstirnseiten;
b. Einer der ersten Abschnitte überdeckt das Zentrum der jeweiligen Wickelstirnseite;
c. Die abgewinkelten ersten Abschnitte der Ableiterstreifen bedecken insgesamt mindestens 5 % der Fläche der jeweiligen Wickelstirnseite.

Vorzugsweise sind die vorgenannten Merkmale a. und b., oder a. und c., oder b. und c., oder, besonders bevorzugt, a. bis c. in Kombination miteinander verwirklicht.

Durch eine Dimensionierung der ersten Abschnitte der Ableiterstreifen gemäß den vorgenannten Merkmalen a. bis c. wird in besonders vorteilhafter Weise erreicht, dass sich die abgewinkelten Abschnitte der Ableiterstreifen auf der jeweiligen Wickelstirnseite nicht überlappen. Gleichzeitig ist dadurch eine sehr gute Stromableitung möglich, da die jeweilige Elektrode über die Fläche verteilt mit dem jeweiligen Gehäuseboden des Gehäuses elektrisch kontaktiert ist.

Die Schweißverbindung der ersten Abschnitte der Ableiterstreifen mit dem jeweiligen Gehäuseboden kann im Prinzip auf verschiedene Weise erfolgen. In besonders bevorzugter Weise zeichnet sich die erfindungsgemäße Energiespeicherzelle im Hinblick auf diese Verschweißung durch mindestens eines der folgenden zusätzlichen Merkmale aus:
a. Die abgewinkelten ersten Abschnitte der Ableiterstreifen sind über mindestens eine punkt- und/oder mindestens eine linienförmige Schweißverbindung mit dem Gehäuseboden verbunden;
b. Die mindestens eine punkt- und/oder die mindestens eine linienförmige Schweißverbindung durchdringt den Gehäuseboden.

Vorzugsweise sind die vorgenannten Merkmale a. und b. in Kombination miteinander verwirklicht.

In besonders bevorzugten Ausführungsbeispielen wird die erfindungsgemäße Energiespeicherzelle derart hergestellt, dass die Verschweißung ausgehend von der Außenseite des Gehäuses erfolgt. Die ersten Abschnitte der Ableiterstreifen werden also bevorzugt so an den jeweiligen Gehäuseböden fixiert, dass die Verschweißung von außen ansetzt und den Gehäuseboden durchdringt, so dass die ersten Abschnitte der Ableiterstreifen mit der jeweiligen Innenseite des Gehäusebodens beispielsweise punktuell verschmelzen und somit elektrisch kontaktiert werden. Diese Verschweißung kann in besonders vorteilhafter Weise durch eine Widerstandsverschweißung, oder, in anderen Ausführungsformen, durch Laserverschweißung realisiert werden.

Die erfindungsgemäße Energiespeicherzelle zeichnet sich demnach in bevorzugten Ausführungsformen dadurch aus, dass sie in den Bereichen eines oder beider Gehäuseböden Schweißpunkte und/oder Schweißnähte aufweist, die das Gehäuse ausgehend von seiner Außenseite durchdringen.

Im Hinblick auf die Fixierung der Ableiterstreifen an dem jeweiligen Stromkollektor zeichnet sich die erfindungsgemäße Energiespeicherzelle in bevorzugten Ausgestaltungen durch mindestens eines der folgenden zusätzlichen Merkmale aus:
a. Der Stromkollektor, an dem die mindestens zwei Ableiterstreifen fixiert sind, weist Bereiche auf, die nicht mit Elektrodenaktivmaterial beschichtet sind;
b. Die zweiten Abschnitte der Ableiterstreifen sind jeweils an einem solchen, nicht mit Elektrodenaktivmaterial beschichteten Bereich des Stromkollektors fixiert, insbesondere angeschweißt.

In bevorzugter Weise sind die vorgenannten Merkmale a. und b. in Kombination miteinander realisiert.

Zusätzlich oder alternativ zu den an den jeweiligen Stromkollektor angeschweißten Ableiterstreifen kann es auch vorgesehen sein, dass es sich bei den Ableiterstreifen nicht um separate Bauteile, sondern um endständige, unbeschichtete Abschnitte des jeweiligen Stromkollektors handelt. Durch Abknicken dieser unbeschichteten Abschnitte, also insbesondere eines oder beider Enden eines solchen Stromkollektors, beispielsweise um 90°, lassen sich diese Enden mit dem jeweiligen Gehäuseboden der Energiespeicherzelle verbinden, entsprechend wie die als separate Bauteile ausgebildeten metallischen Ableiterstreifen, die durch Verschweißung mit dem bandförmigen Stromkollektor verbunden werden. Es kann bei der erfindungsgemäßen Energiespeicherzelle beispielsweise vorgesehen sein, dass ein Ableiterstreifen durch einen umgeknickten endständigen Abschnitt des unbeschichteten Stromkollektorstreifens einer Elektrode gebildet wird und dass ein weiterer Ableiterstreifen durch Anschweißen eines Metallfolienstreifens an das Stromkollektorband gebildet wird.

In besonders bevorzugten Ausführungsformen zeichnet sich die elektrochemische Energiespeicherzelle durch das folgende zusätzliche Merkmal aus:
a. Die auf der jeweiligen Wickelstirnseite aufliegenden ersten Abschnitte der Ableiterstreifen sind gegenüber dieser Wickelstirnseite elektrisch isoliert.

Diesem Aspekt der Erfindung liegt zugrunde, dass an den jeweiligen Wickelstirnseiten des Elektroden-Separator-Verbunds sowohl positive als auch negative Elektroden offenliegen können. Um die volle Funktionsfähigkeit der Energiespeicherzelle zu gewährleisten, sollte daher ein Kurzschluss zwischen den Elektroden vermieden werden. In besonders bevorzugten Ausführungsformen sind bei der erfindungsgemäßen Energiespeicherzelle daher Maßnahmen vorgesehen, um eine elektrische Isolierung an dieser Stelle zu gewährleisten.

So können beispielsweise Isoliermittel vorgesehen sein, die einen direkten elektrischen Kontakt zwischen den Wickelstirnseiten und den Ableiterabschnitten, die flach auf der jeweiligen Wickelstirnseite aufliegen, unterbinden. Bei einem solchen Isoliermittel kann es sich zum Beispiel um eine Folie, wie zum Beispiel eine Kunststoffklebefolie, handeln, mit der diejenige Seite der ersten Ableiterabschnitte abgedeckt ist, die auf der Wickelstirnseite aufliegen. Bei der Herstellung der Elektrodenbänder und bei der Anbringung der Ableiterstreifen daran kann beispielsweise ein Stück einer Kunststoffklebefolie auf die eine Seite der Ableiterstreifen derart aufgeklebt werden, dass die Kunststoffklebefolie in dem abgewinkelten Zustand der ersten Abschnitte der Ableiterstreifen zwischen der jeweiligen Wickelstirnseite und dem Ableiterstreifen liegt. Alternativ kann die gesamte Wickelstirnseite mit einer Folie oder einer Isolierscheibe abgedeckt sein, wobei in der Folie oder Scheibe Durchbrechungen für einen Durchtritt der Ableiterstreifen vorgesehen sein können.

Auch im Hinblick auf eine Isolierung der Wickelstirnseiten zeichnet sich die erfindungsgemäße Energiespeicherzelle in besonders bevorzugten Ausführungsformen durch das folgende zusätzliche Merkmal aus:
a. Die erste Wickelstirnseite und/oder die zweite Wickelstirnseite werden von mindestens einem Längsrand des mindestens einen Separators gebildet.

Gemäß dem vorgenannten Merkmal a. ist der oder sind die bandförmigen Separatoren innerhalb des gewickelten Elektroden-Separator-Verbunds breiter als die bandförmigen Elektroden, so dass die Längsränder des oder der Separatoren die Stirnseiten des Wickels bilden und dabei gleichzeitig eine isolierende Funktion übernehmen können.

In diesen Ausführungsformen kann die elektrische Isolierung der Wickelstirnseiten also derart realisiert sein, dass die Separatorenbänder in dem Elektroden-Separator-Verbund breiter als die Elektrodenbänder sind und damit an beiden Wickelstirnseiten hervorstehen. Durch ein Umklappen dieser hervorstehenden Längsränder der Separatorenbänder kann eine Isolierung erreicht werden, so dass auf weitere, zusätzliche Isoliermittel gegebenenfalls verzichtet werden kann.

Die Vorteile der beschriebenen erfindungsgemäßen Maßnahmen mit zwei oder mehr metallischen Ableiterstreifen pro Elektrodenband können im Prinzip für verschiedene Zelltypen genutzt werden. Beispielsweise kann diese Bauform der Energiespeicherzellen für Systeme auf der Basis von Zink/MnO₂ oder Nickel/Kadmium oder Nickel/Metallhydrid genutzt werden.

In ganz besonders bevorzugter Weise handelt es sich bei den erfindungsgemäßen Energiespeicherzellen um Lithium-Ionen-Zellen, insbesondere um sekundäre Lithium-Ionen-Zellen.

Durch die Verschweißung der metallischen Ableiterstreifen mit den jeweiligen Gehäuseteilen bei der erfindungsgemäßen Energiespeicherzelle ist der besondere Vorteil verbunden, dass es nicht zu Kontaktproblemen zwischen den Ableiterstreifen und den Gehäuseteilen kommt. Insbesondere bei sekundären Lithium-Ionen-Zellen unterliegen die Elektroden während eines Lade-Entlade-Zyklus Volumenveränderungen, die bei herkömmlichen Zellen zu mechanischen Spannungen innerhalb der Zelle führen können. Durch die feste Verbindung mittels der Verschweißung werden hiermit verbundene Probleme bei der erfindungsgemäßen Energiespeicherzelle vermieden.

In Bezug auf die äußere Form der erfindungsgemäßen Energiespeicherzellen handelt es sich insbesondere um Zellen mit einer zylindrischen Bauform, beispielsweise um zylindrische Rundzellen, deren Höhe größer als ihr Durchmesser ist. Solche Rundzellen können beispielsweise eine Höhe im Bereich von 15 mm bis 150 mm aufweisen. Der Durchmesser liegt dabei bevorzugt in einem Bereich von 10 mm bis 50 mm. Innerhalb dieser Bereiche sind Formfaktoren von beispielsweise 18 x 65 (Durchmesser mal Höhe in Millimeter) oder 21 × 70 (Durchmesser mal Höhe in Millimeter) besonders bevorzugt.

Bei solchen zylindrischen Rundzellen kann es bevorzugt sein, dass nur eine der Elektroden gemäß dem erfindungsgemäßen Konzept mit mindestens zwei metallischen Ableiterstreifen versehen ist, wobei in diesem Fall die Ableiterstreifen insbesondere auf der Bodenseite des Gehäuses auf der Innenseite verschweißt sind. Auf der gegenüberliegenden Stirnseite des Gehäuses kann eine andere Art der elektrischen Anbindung der entsprechenden Elektrode vorgesehen sein, beispielsweise mittels einer Kontaktplatte oder Ähnlichem.

In besonders bevorzugten Ausgestaltungen zeichnet sich die erfindungsgemäße Energiespeicherzelle durch mindestens eines der folgenden zusätzlichen Merkmale aus:
a. Die Energiespeicherzelle ist eine Knopfzelle;
b. Das Gehäuse oder zumindest der Gehäusemantel ist zylindrisch ausgebildet;
c. Das Gehäuse umfasst zwei becherförmige Gehäuseteile mit jeweils einem Boden, einer umlaufenden Seitenwand und einem Öffnungsrand, von denen eines mit dem Öffnungsrand voran in das andere eingeschoben ist;
d. Die Gehäuseteile sind durch eine ringförmige, elektrisch isolierende Dichtung voneinander getrennt.

Vorzugsweise sind die vorgenannten Merkmale a. bis d. in Kombination miteinander verwirklicht.

Bei einer solchen Knopfzelle bildet der Boden eines der Gehäuseteile den unteren Boden und der Boden des anderen Gehäuseteils den oberen Boden, also gewissermaßen den Deckel des Gehäuses. Die erfindungsgemäße Energiespeicherzelle in Form einer solchen Knopfzelle umfasst damit zwei metallische Gehäusehalbteile, die zweckmäßigerweise durch eine elektrisch isolierende Dichtung voneinander getrennt sind und die ein Gehäuse mit einem ebenen Bodenbereich und einem dazu parallelen ebenen Deckelbereich ausbilden. Bei den beiden Gehäusehalbteilen handelt es sich vorzugsweise um einen sogenannten Gehäusebecher und einen Gehäusedeckel. Als Material für diese Gehäusehalbteile sind insbesondere vernickelter Stahl oder Blech bevorzugt. Weiterhin eignen sich auch andere metallische Werkstoffe wie insbesondere Trimetalle, beispielsweise mit der Abfolge Nickel, Stahl (oder Edelstahl) und Kupfer. Die Nickelschicht bildet dabei bevorzugt die Außenseite und die Kupferschicht bildet bevorzugt die Innenseite des Knopfzellengehäuses. Als Dichtung kann beispielsweise eine Spritzguss- oder Foliendichtung zum Einsatz kommen.

Die bevorzugte Ausführungsform der erfindungsgemäßen Energiespeicherzelle in Form einer Knopfzelle zeichnet sich in der Regel durch einen kreisrunden Querschnitt aus. In anderen Ausführungsformen können jedoch auch ovale Ausgestaltungen vorgesehen sein. Im Allgemeinen ist es bei der erfindungsgemäßen Ausführungsform der Knopfzelle vorteilhaft, dass das Verhältnis von Höhe zu Durchmesser unterhalb von 1 liegt. Besonders bevorzugt ist beispielsweise ein Verhältnis von Höhe zu Durchmesser zwischen 0,1 und 0,9, insbesondere zwischen 0,15 und 0,7. Mit dem Begriff "Höhe" ist dabei der kürzeste Abstand zwischen dem ebenen Bodenbereich und dem dazu parallelen ebenen Deckelbereich zu verstehen. Der Begriff "Durchmesser" meint die maximale Entfernung zweier Punkte auf dem Mantelbereich der Knopfzelle.

Prinzipiell ist es möglich, dass nur eine der Elektroden der erfindungsgemäßen Energiespeicherzelle in der beschriebenen Weise mit mindestens zwei metallischen Ableiterstreifen zur elektrischen Anbindung der jeweiligen Elektrode an dem jeweiligen Gehäuseboden ausgestattet ist. In diesen Fällen kann die jeweils andere Elektrode auf andere Weise elektrisch kontaktiert sein, beispielsweise mittels eines plattenförmigen Kontaktelements oder auf andere Weise. Hierbei ist es möglich, dass entweder die positive(n) Elektrode(n) oder die negative(n) Elektrode(n) entsprechend mit mindestens zwei metallischen Ableiterstreifen gemäß dem erfindungsgemäßen Konzept versehen sind.

In anderen, besonders bevorzugten Ausführungsformen zeichnet sich die erfindungsgemäße Energiespeicherzelle dadurch aus, dass sowohl die positive(n) Elektrode(n) als auch die negative(n) Elektrode(n) jeweils mit mindestens zwei metallischen Ableiterstreifen versehen sind und dass die jeweils ersten Abschnitte dieser Ableiterstreifen an der jeweiligen Wickelstirnseite herausragen und derart abgewinkelt sind, dass sie auf der jeweiligen Wickelstirnseite aufliegen, wobei diese ersten Abschnitte der Ableiterstreifen durch Verschweißung mit dem jeweiligen Gehäuseboden elektrisch kontaktiert sind.

Demgemäß zeichnet sich die erfindungsgemäße Energiespeicherzelle in besonders bevorzugten Ausführungsformen durch mindestens eines der folgenden zusätzlichen Merkmale aus, wobei vorzugsweise die nachgenannten Merkmale a. bis g. in Kombination miteinander verwirklicht sind:
a. Die mindestens zwei metallischen Ableiterstreifen sind elektrisch mit der mindestens einen positiven Elektrode verbunden und treten alle aus der ersten Wickelstirnseite aus;
b. Die Energiespeicherzelle umfasst mindestens zwei weitere metallische Ableiterstreifen zur elektrischen Kontaktierung der mindestens einen negativen Elektrode;
c. Die mindestens zwei weiteren metallischen Ableiterstreifen sind an unterschiedlichen Positionen des bandförmigen Stromkollektors der mindestens einen negativen Elektrode fixiert;
d. Die weiteren Ableiterstreifen treten alle aus der zweiten Wickelstirnseite aus und umfassen einen ersten Abschnitt außerhalb und einen zweiten Abschnitt innerhalb des Wickels;
e. Die ersten Abschnitte der weiteren Ableiterstreifen sind derart abgewinkelt, dass sie flach auf der zweiten Wickelstirnseite aufliegen;
f. Die zweiten Abschnitte der weiteren Ableiterstreifen sind durch Verschweißung mit einem der Gehäuseböden verbunden;
g. Die Dimensionen der weiteren Ableiterstreifen und/oder die Positionen, an denen sie an dem bandförmigen Stromkollektor fixiert sind, sind derart gewählt, dass die auf der zweiten Wickelstirnseite aufliegenden ersten Abschnitte der weiteren Ableiterstreifen einander nicht überlappen.

In analoger Weise kann es vorgesehen sein, dass die folgenden Merkmale a. bis g. realisiert sind:
a. Die mindestens zwei metallischen Ableiterstreifen sind elektrisch mit der mindestens einen negativen Elektrode verbunden und treten alle aus der zweiten Wickelstirnseite aus;
b. Die Energiespeicherzelle umfasst mindestens zwei weitere metallische Ableiterstreifen zur elektrischen Kontaktierung der mindestens einen positiven Elektrode;
c. Die mindestens zwei weiteren metallischen Ableiterstreifen sind an unterschiedlichen Positionen des bandförmigen Stromkollektors der mindestens einen positiven Elektrode fixiert;
d. Die weiteren Ableiterstreifen treten alle aus der ersten Wickelstirnseite aus und umfassen einen ersten Abschnitt außerhalb und einen zweiten Abschnitt innerhalb des Wickels;
e. Die ersten Abschnitte der weiteren Ableiterstreifen sind derart abgewinkelt, dass sie flach auf der ersten Wickelstirnseite aufliegen;
f. Die zweiten Abschnitte der weiteren Ableiterstreifen sind durch Verschweißung mit einem der Gehäuseböden verbunden;
g. Die Dimensionen der weiteren Ableiterstreifen und/oder die Positionen, an denen sie an dem bandförmigen Stromkollektor fixiert sind, sind derart gewählt, dass die auf der ersten Wickelstirnseite aufliegenden ersten Abschnitte der weiteren Ableiterstreifen einander nicht überlappen.

In diesen beiden vorgenannten Ausführungsbeispielen sind also die jeweiligen ersten Abschnitte der Ableiterstreifen der einen Elektrode mit dem Gehäuseboden auf einer der Stirnseiten des Gehäuses verschweißt, und die ersten Ableiterstreifen der anderen Elektrode auf der gegenüberliegenden Stirnseite des Gehäuses sind mit dem sich dort befindlichen Gehäuseboden verschweißt.

Die Erfindung umfasst weiterhin ein Verfahren zur Herstellung einer elektrochemischen Energiespeicherzelle und insbesondere zur Herstellung einer elektrochemischen Energiespeicherzelle gemäß der obigen Beschreibung. Dieses Herstellungsverfahren umfasst die folgenden Schritte:
a. Bereitstellung eines zylindrischen Elektroden-Separator-Verbundes umfassend mindestens eine bandförmige negative Elektrode und mindestens eine bandförmige positive Elektrode und mindestens einen bandförmigen Separator, wobei
   - es sich bei dem Elektroden-Separator-Verbund um einen Wickel, in dem die Elektroden und der mindestens eine Separator spiralförmig aufgewickelt vorliegen, handelt,
   - der zylindrische Elektroden-Separator-Verbund eine erste Wickelstirnseite und eine zweite Wickelstirnseite und einen umlaufenden Mantel umfasst;
   - die Elektroden jeweils einen bandförmigen metallischen Stromkollektor, der vorzugsweise beidseitig mit einem Elektrodenmaterial beschichtet ist, umfassen,
   - mindestens zwei metallische Ableiterstreifen an unterschiedlichen Positionen des bandförmigen Stromkollektors von mindestens einer der Elektroden fixiert sind,
   - die Ableiterstreifen einer Elektrode alle aus einer der Wickelstirnseiten austreten und einen ersten Abschnitt außerhalb und einen zweiten Abschnitt innerhalb des Wickels umfassen;
b. Abwinkeln der ersten Abschnitte der Ableiterstreifen derart, dass sie flach auf der jeweiligen Wickelstirnseite aufliegen und einander nicht überlappen;
c. Bereitstellung von Gehäuseteilen zur Bildung eines Gehäuses, das einen umlaufenden Gehäusemantel sowie einen ersten und einen zweiten Gehäuseboden aufweist;
d. Montage der Energiespeicherzelle sowie des Gehäuses unter Anordnung des Elektroden-Separator-Verbunds derart, dass die Wickelstirnseiten bei geschlossenem Gehäuse in Richtung der Gehäuseböden weisen;
e. Verschweißen der jeweils ersten Abschnitte der Ableiterstreifen von mindestens einer der Elektroden mit jeweils einem der Gehäuseböden.

Die vorgenannten Schritte a. bis e. müssen nicht zwingend in der genannten Abfolge durchgeführt werden. Insbesondere kann die Montage der Energiespeicherzelle gemäß dem vorgenannten Merkmal d. und das Verschweißen der ersten Abschnitte der Ableiterstreifen mit einem der Gehäuseböden gemäß dem vorgenannten Merkmal e. in der genannten oder auch in der umgedrehten Reihenfolge durchgeführt werden. So ist es möglich, dass die ersten Abschnitte der Ableiterstreifen, die aus der jeweiligen Wickelstirnseite herausragen, zunächst mit dem jeweiligen Gehäuseboden verschweißt werden, bevor das Gehäuse insgesamt mit dem Elektroden-Separator-Verbund darin zusammengesetzt wird. Diese Ausführungsform hat den besonderen Vorteil, dass die ersten Abschnitte der Ableiterstreifen gewissermaßen unter Sicht an den Innenseiten der Gehäuseböden angeschweißt werden können und also auch von innen angeschweißt werden können. Zweckmäßigerweise sind in dieser Ausführungsform die ersten Abschnitte der Ableiterstreifen etwas länger ausgebildet, so dass mehr Spielraum für das Anschweißen der ersten Abschnitte der Ableiterstreifen besteht.

In anderen Ausführungsformen wird zunächst die Montage der Energiespeicherzelle einschließlich des Zusammensetzens der Gehäusehalbteile vorgenommen, bevor die Verschweißung der ersten Abschnitte der Ableiterstreifen mit dem jeweiligen Gehäuseboden erfolgt. In diesen Ausführungsformen erfolgt das Schweißen von außen.

Das Verschweißen kann dabei beispielsweise durch Laserverschweißen mit punkt- oder linienförmigen Schweißstellen erfolgen.

Bei einer Verschweißung mittels Laser ist es zweckmäßig, wenn die Betriebsparameter des Lasers an die Dicke des Gehäuses angepasst werden. Die Leistung des Lasers lässt sich beispielsweise durch eine Variation der Pulsfrequenz modulieren. Diese Modulation erfolgt vorzugsweise derart, dass der Laser lediglich für eine Verschweißung des jeweiligen Gehäusebodens und der auf der jeweiligen Wickelstirnseite aufliegenden Abschnitte der Ableiterstreifen sorgt, während andere Komponenten, wie insbesondere der Elektrodenwickel, durch den Laser nicht beschädigt werden.

In anderen, besonders bevorzugten Ausführungsformen erfolgt das Verschweißen durch Widerstandsschweißen. Hierbei wird eine Doppelelektrode, vorzugsweise auf der Außenseite des jeweiligen Gehäusebodens, angesetzt, wobei der Strom durch das metallische Gehäuse der Zelle fließt und das metallische Material, beispielsweise Aluminium, an der dünnsten Stelle schmilzt und so die Schweißstelle(n) hergestellt wird/werden.

In weiteren Ausführungsformen kann es vorgesehen sein, dass die auf den jeweiligen Gehäusestirnseiten flach abgelegten ersten Abschnitte der jeweiligen Ableiterstreifen beispielsweise mit einem Klebeband flach auf der oder den Stirnseiten des Wickels fixiert werden, bevor der Wickel in die Gehäuseelemente eingebracht wird.

Die Verschweißung der auf den jeweiligen Wickelstirnseiten aufliegenden Abschnitte der Ableiterstreifen mit dem jeweiligen Gehäuseboden kann durch Sensormittel unterstützt werden, so dass eine sehr genaue und präzise Verschweißung erleichtert wird, wie im Folgenden noch näher erläutert wird. In anderen Ausführungsformen kann die Verteilung und Anordnung der auf den Wickelstirnseiten aufliegenden Abschnitte der Ableiterstreifen durch eine entsprechende Positionierung der Ableiterstreifen über die Länge der Elektrodenbänder derart gesteuert werden, dass deren Position auf den Wickelstirnseiten vorhersehbar ist und die Verschweißung von außen ohne weitere Sensormittel in ausreichend präziser Weise möglich ist.

Insbesondere in solchen Ausführungsformen, in denen die Verschweißung von außen erfolgt, ist es besonders vorteilhaft, wenn die Positionen der auf den jeweiligen Wickelstirnseiten aufliegenden ersten Abschnitte der Ableiterstreifen erfasst werden, so dass die Verschweißung sehr präzise und genau erfolgen kann. In einer besonders bevorzugten Ausführungsform ist in diesem Zusammenhang mindestens eines der folgenden zusätzlichen Merkmale vorgesehen:
a. Die Position von mindestens einem der auf der jeweiligen Wickelstirnseite aufliegenden, abgewinkelten ersten Abschnitte der Ableiterstreifen wird mittels eines Sensors erfasst;
b. Der mindestens eine der ersten Abschnitte der Ableiterstreifen wird mittels eines Lasers oder mittels Widerstandsschweißen mit dem einen der Gehäuseböden verschweißt, wobei die Verschweißung durch den Gehäuseboden hindurch erfolgt.

Vorzugsweise sind die vorgenannten Merkmale a. und b. in Kombination miteinander realisiert.

Die Position der Ableiterstreifen wird bevorzugt durch ein bildgebendes und/oder bildverarbeitendes Verfahren ermittelt, beispielsweise durch ein fotographisches Verfahren, mittels Video, mittels Computertomographie, mittels eines mikroskopischen Verfahrens (beispielsweise elektronenmikroskopisch, ionenmikroskopisch (z.B. Helium-Ionen-Mikroskop), mittels Laser oder mittels Ultraschall ermittelt.

In besonders bevorzugten Ausgestaltungen des erfindungsgemäßen Verfahrens wird mit dem Verfahren eine Knopfzelle hergestellt. Insbesondere bei der Herstellung einer Knopfzelle kann das Verfahren in bevorzugten Ausgestaltungen mindestens eines der folgenden zusätzlichen Merkmale aufweisen:
a. Das Gehäuse wird aus zwei becherförmigen Gehäuseteilen gebildet, die jeweils einen Boden, eine umlaufende Seitenwand und einen Öffnungsrand aufweisen;
b. Während der Montage wird der Elektroden-Separator-Verbund in einem der Gehäuseteile platziert, das anschließend mit seinem Öffnungsrand voran in das andere Gehäuseteil eingeschoben wird.

Vorzugsweise sind die beiden vorgenannten Merkmale a. und b. in Kombination miteinander realisiert.

Im Hinblick auf die Erfassung der Position der auf der jeweiligen Wickelstirnseite aufliegenden ersten Abschnitte der Ableiterstreifen kann dabei in bevorzugten Ausgestaltungen des Verfahrens gemäß mindestens einem der folgenden zusätzlichen Merkmale vorgegangen werden:
a. Die Erfassung der Position von mindestens einem der auf der jeweiligen Wickelstirnseite aufliegenden, abgewinkelten ersten Abschnitte der Ableiterstreifen erfolgt nach dem Platzieren des Elektroden-Separator-Verbunds in dem Gehäuseteil, vorzugsweise nach dem Einschieben des Gehäuseteils in das andere Gehäuseteil;
b. Die Erfassung der Position von mindestens einem der auf der jeweiligen Wickelstirnseite aufliegenden, abgewinkelten ersten Abschnitte der Ableiterstreifen erfolgt mittels Computertomographie.

Vorzugsweise sind die beiden vorgenannten Merkmale a. und b. in Kombination miteinander realisiert.

Die Computertomographie erlaubt dabei eine Erfassung der Position der auf der jeweiligen Stirnseite des Wickels liegenden ersten Abschnitt der Ableiterstreifen auch bei bereits geschlossenem Gehäuse, sodass anschließend sehr präzise und genau die Verschweißung der Ableiterstreifen mit der Innenseite des Gehäusebodens von außen erfolgen kann.

Alternativ kann gemäß mindestens einem der folgenden zusätzlichen Merkmale vorgegangen werden:
a. Die Erfassung der Position von mindestens einem der auf der jeweiligen Wickelstirnseite aufliegenden, abgewinkelten ersten Abschnitte der Ableiterstreifen erfolgt nach dem Platzieren des Elektroden-Separator-Verbunds in dem Gehäuseteil, aber vor dem Einschieben des Gehäuseteils in das andere Gehäuseteil.
b. Die Erfassung der Position von mindestens einem der auf der jeweiligen Wickelstirnseite aufliegenden, abgewinkelten ersten Abschnitte der Ableiterstreifen erfolgt mittels einer Kamera.

Vorzugsweise sind die vorgenannten Merkmale a. und b. in Kombination miteinander realisiert.

Die Vorgehensweise gemäß dieser Ausführungsform ist insbesondere in solchen Fällen vorteilhaft, in denen an den Innenseiten der Gehäuseböden jeweils die ersten Abschnitte der Ableiterstreifen der jeweiligen Elektrode bei noch offenem Gehäuse angeschweißt werden.

Bezüglich weiterer Details des Herstellungsverfahrens wird auch auf die obigen Ausführungsformen in Bezug auf die damit herstellbaren Energiespeicherzellen Bezug genommen.

Weitere Merkmale und Vorteile der Erfindung ergeben sich aus der nachfolgenden Beschreibung von bevorzugten Ausführungsformen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen:
- Fig. 1: Querschnitt durch eine bevorzugte Ausführungsform einer erfindungsgemäßen Energiespeicherzelle in Form einer Knopfzelle;
- Fig. 2A,B: schematische Darstellung der Elektrodenbänder einer erfindungsgemäßen Energiespeicherzelle mit Anordnung der metallischen Ableiterstreifen;
- Fig. 3A-C: schematische Darstellung der Anbringung eines metallischen Ableiterstreifens mit Integration von Isoliermitteln;
- Fig. 4: Seitenansicht auf einen Elektroden-Separator-Verbund mit abragenden Ableiterabschnitten; und
- Fig. 5: Aufsicht auf einen Elektroden-Separator-Verbund mit flach auf der Wickelstirnseite aufliegenden Abschnitten der Ableiterstreifen.

### BESCHREIBUNG BEVORZUGTER AUSFÜHRUNGSBEISPIELE

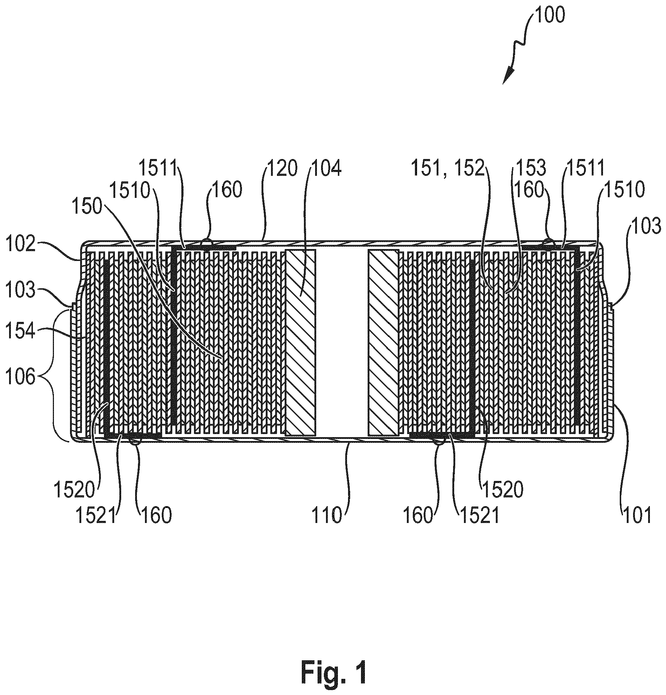

**Fig. 1** zeigt im Querschnitt eine Knopfzelle als Beispiel für eine erfindungsgemäße Energiespeicherzelle 100. Das Gehäuse der Knopfzelle wird von zwei metallischen Gehäusehalbteilen gebildet, und zwar einem metallischen Becherteil 101 und einem metallischen Deckelteil 102. Über eine dazwischenliegende Dichtung 103 sind die beiden Teile dichtend miteinander verbunden. Zusammen bilden sie ein Gehäuse mit einem ersten Gehäuseboden 110 und einem zweiten Gehäuseboden 120, die zueinander parallel liegen. Im Gebrauchszustand bilden die beiden Gehäuseböden 110, 120 die Pole der Knopfzelle, an denen eine Stromabnahme durch einen Verbraucher erfolgen kann. Der Gehäuseboden 110 des Becherteils bildet vorzugsweise den positiven Pol und der Gehäuseboden 120 des Deckteils bildet dementsprechend den negativen Pol.

Das Deckelteil 120 ist in das Becherteil 110 eingeschoben, so dass die Mantelbereiche des Deckelteils und des Becherteils überlappen, wobei der Innenradius des Becherteils 110 im überlappenden Bereich 106 zwischen Becherteil 101 und Deckelteil 102 im Wesentlichen konstant ist. Der Rand des Becherteils 110 ist also nicht umgebördelt, wie es in anderen Ausführungsformen möglich ist, sondern in diesem Ausführungsbeispiel handelt es sich um eine bördelfreie Knopfzelle.

Im Inneren des Gehäuses befindet sich der Elektroden-Separator-Verbund 150. Der Elektroden-Separator-Verbund 150 liegt in Form eines spiralförmigen Wickels vor, dessen Stirnseiten in Richtung des ersten Gehäusebodens 110 und des dazu parallelen zweiten Gehäusebodens 120 weisen. Im Zentrum des Elektroden-Separator-Verbunds befindet sich ein Wickelkern 104, der als Hohlzylinder aus beispielsweise Kunststoff gebildet ist und der einen axialen Hohlraum im Zentrum des Wickels teilweise ausfüllt.

Der Elektroden-Separator-Verbund 150 selbst wird von bandförmigen Elektroden 151, 152 mit entgegengesetzter Polarität gebildet, die jeweils durch bandförmige Separatoren 153 voneinander getrennt sind. Der äußere Umfang des wickelförmigen Elektroden-Separator-Verbunds ist mit einer isolierenden Kunststofffolie 154 bedeckt.

Die negativen und positiven Elektrodenbänder 151, 152 werden jeweils von einem bandförmigen metallischen Stromkollektor gebildet, der vorzugsweise beidseitig mit dem jeweiligen Elektrodenmaterial beschichtet ist. Sowohl bei der bandförmigen negativen Elektrode als auch bei der bandförmigen positiven Elektrode sind in diesem Ausführungsbeispiel jeweils mindestens zwei metallische Ableiterstreifen 1510, 1520 vorgesehen. Die Ableiterstreifen 1510 und 1520 sind an unterschiedlichen Positionen des jeweiligen bandförmigen Stromkollektors der Elektroden 151, 152 angebracht. Dabei treten nach der Herstellung des wickelförmigen Elektroden-Separator-Verbunds 150 die metallischen Ableiterstreifen 1510, 1520 bzw. jeweils ein erster Abschnitt der metallischen Ableiterstreifen aus einer der Wickelstirnseiten heraus und werden im Zuge des Herstellungsverfahrens derart abgewinkelt, dass die herausragenden ersten Abschnitte 1511,1521 der Ableiterstreifen 1510, 1520 flach auf der jeweiligen Wickelstirnseite aufliegen. Diese auf den jeweiligen Wickelstirnseiten aufliegenden ersten Abschnitte 1511, 1521 sind durch Schweißverbindungen 160 mit den jeweiligen Gehäuseböden 110, 120 elektrisch leitend verbunden.

Die Schweißstellen 160, die punkt- oder linienförmig sein können, durchdringen das Gehäuse der Knopfzelle von außen nach innen, wobei hierdurch die auf den Wickelstirnseiten aufliegenden ersten Abschnitte 1511, 1521 der metallischen Ableiterstreifen fest mit der Innenseite des Gehäuses verbunden und elektrisch kontaktiert werden.

Besonders vorteilhaft ist es, dass sich die flach auf den Wickelstirnseiten aufliegenden Abschnitte 1511, 1521 der metallischen Ableiterstreifen 1510, 1520 nicht überlappen. Damit werden einerseits Kurzschlüsse vermieden. Andererseits erlaubt dies eine möglichst flache Bauform und gleichmäßige Anbindung der Elektroden unter optimaler Innenvolumenausnutzung der Energiespeicherzelle.

Die Wandstärke des metallischen Gehäuses bzw. des metallischen Becherteils 101 und des metallischen Deckelteils 102 liegt vorzugsweise in einem Bereich zwischen 30 µm und 400 µm. Die Dicke der metallischen Ableiterstreifen 1510, 1520 liegt vorzugsweise in einem Bereich zwischen 5 µm und 100 µm.

Der anodenseitige Ableiterstreifen 1510 kann beispielsweise aus Nickel oder Kupfer und der kathodenseitige Ableiterstreifen 1520 kann beispielsweise aus Aluminium bestehen.

Als Material für die Gehäusebestandteile eignet sich insbesondere vernickelter Stahl oder Blech oder, in anderen Ausführungsformen, Trimetalle, beispielsweise mit der Abfolge Nickel, Stahl (oder Edelstahl) und Kupfer, wobei die Kupferschicht bevorzugt die Innenseite des Gehäuses bildet.

Bei den Stromkollektoren handelt es sich bevorzugt um metallische Folien oder gegebenenfalls um metallische Netze. Auf der Seite der positiven Elektroden bestehen die Stromkollektoren bevorzugt aus Aluminium, auf der Seite der negativen Elektrode bevorzugt aus Nickel oder Kupfer. Die Folien oder Netze weisen insbesondere eine Dicke zwischen 1 µm und 100 µm auf.

Innerhalb des Elektroden-Separator-Verbunds 150 sind die Elektroden und Separatoren beispielsweise in einer der folgenden Schichtabfolgen angeordnet:
- negative Elektrode/Separator/positive Elektrode/Separator
   oder
- positive Elektrode/Separator/negative Elektrode/Separator.

In anderen Ausführungsformen können auch Verbünde mit der Schichtabfolge
- negative Elektrode/Separator/positive Elektrode/Separator/negative Elektrode
   oder
- positive Elektrode/Separator/negative Elektrode/Separator/positive Elektrode vorgesehen sein.

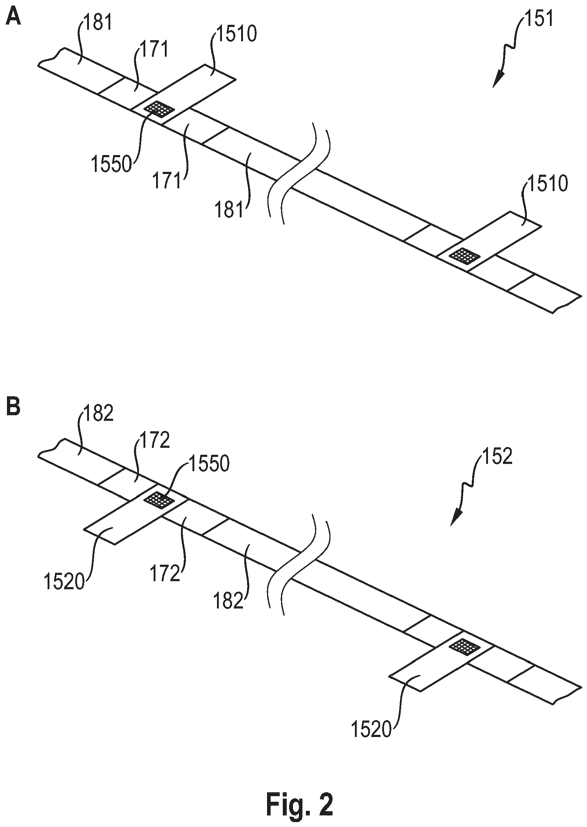

**Fig. 2** zeigt beispielhafte Ausführungsformen der Elektrodenbänder 151 (beispielsweise Anode) und 152 (beispielsweise Kathode). Die Elektrodenbänder werden jeweils von einem bandförmigen Stromkollektor 171, 172 gebildet, der vorzugsweise beidseitig mit entsprechendem Elektrodenmaterial 181, 182 beschichtet ist. An jeweils mindestens zwei Positionen der Elektrodenbänder 151, 152 befinden sich die metallischen Ableiterstreifen 1510, 1520, die in einem rechten Winkel von den Elektrodenbändern abragen. In den Bereichen der Fixierung der Ableiterstreifen 1510, 1520 sind die Stromkollektorbänder 171, 172 nicht mit dem Elektrodenmaterial 181, 182 beschichtet. Die Ableiterstreifen 1510, 1520 sind in diesen unbeschichteten Bereichen der Stromkollektoren 171, 172 durch Verschweißungen 1550 an dem jeweiligen Stromkollektorband fixiert.

Bei der Herstellung des wickelförmigen Elektroden-Separator-Verbunds werden die Elektrodenbänder 151, 152 so orientiert, dass die jeweiligen Ableiterstreifen 1510, 1520 an den einander gegenüberliegenden Stirnseiten des Wickels austreten.

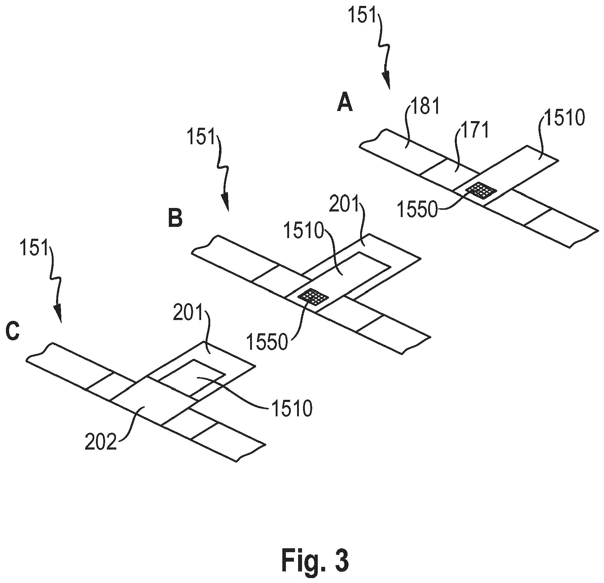

Aus **Fig. 3A-C** gehen weitere Details zu der elektrischen Isolierung der metallischen Ableiterstreifen 1510, 1520 gegenüber den Wickelstirnseiten des Elektroden-Separator-Verbunds hervor, die in bevorzugten Ausführungsbeispielen realisiert sein können. Hierbei ist in beispielhafter Weise die schrittweise Isolierung eines Ableiterstreifens 1510 bei beispielsweise der negativen Elektrode 151 gezeigt. Gemäß Fig. 3A wird der Ableiterstreifen 1510 in einem Bereich des Elektrodenbandes 151 fixiert, der nicht mit dem Elektrodenmaterial 181 beschichtet ist und demgemäß von dem unbeschichteten Stromkollektor 171 gebildet wird. Der Ableiterstreifen 1510 wird über eine Verschweißung 1550 in dem unbeschichteten Bereich des Stromkollektors 171 fixiert. Gemäß Fig. 3B wird in einem folgenden Schritt die Rückseite des Ableiterstreifens 1510 mit einem ersten Isolationsband 201, beispielsweise einem Band aus Kapton oder Polypropylen, abgeklebt. Dieses Isolationsband 201 wird später als Isolierelement fungieren, welches einen unmittelbaren elektrischen Kontakt zwischen dem auf der Wickelstirnseite heraustretenden Abschnitt des Ableiterstreifens 1510 und der Wickelstirnseite unterbindet. Gemäß Fig. 3C wird in einem weiteren Schritt auf der vorderen Seite ein weiteres Isolationsband 202 angebracht, wobei die Verschweißung 1550 überklebt wird. Bei den Isolationsbändern 201, 202 kann es sich insbesondere um Klebebänder handeln.

In anderen Ausführungsformen ist es auch möglich, auf derartige Isolationsmittel zu verzichten, indem beispielsweise die Wickelstirnseiten von umgeklappten Rändern der Separatorenbänder gebildet werden, die gleichfalls für eine ausreichende Isolierung sorgen können.

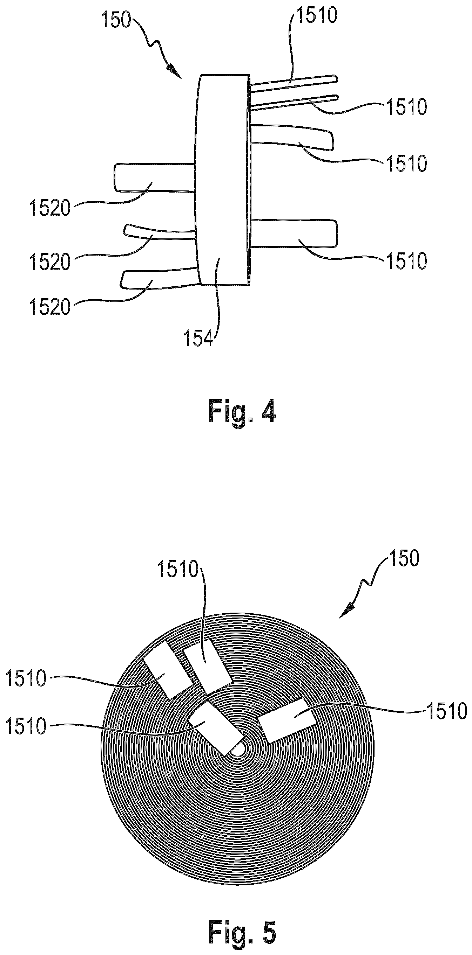

**Fig. 4** zeigt den gewickelten Elektroden-Separator-Verbund 150, dessen Außenseite mit einem Klebeband 154 umklebt ist. Aus den einander gegenüberliegenden Stirnseiten des wickelförmigen Elektroden-Separator-Verbunds 150 ragen die jeweils ersten Abschnitte der Ableiterstreifen 1510 bzw. 1520 heraus. Im weiteren Verlauf der Fertigung können die herausragenden ersten Abschnitte der Ableiterstreifen 1510, 1520 jeweils noch etwas gekürzt werden, damit sie sich im abgewinkelten Zustand, bei dem sie flach auf den jeweiligen Wickelstirnseiten aufliegen, nicht überlappen.

**Fig. 5** zeigt eine Aufsicht auf eine Wickelstirnseite, bei der die jeweils ersten Abschnitte der Ableiterstreifen 1510 flach auf der Wickelstirnseite aufliegen. Die Position und Länge der ersten Abschnitte der Ableiterstreifen 1510 ist dabei so gewählt, dass sich die abgewinkelten Abschnitte nicht überlappen. In dieser Form kann der Elektroden-Separator-Verbund 150 in die Gehäuseteile zur weiteren Montage der Energiespeicherzelle eingebracht werden. Zur Erleichterung der Montage können die abgewinkelten Abschnitte der Ableiterstreifen 1510 mit einem Isolationsband an der Wickelstirnseite fixiert werden.

In dieser Darstellung nicht erkennbar sind gegebenenfalls vorgesehene Isolationsbandabschnitte, die zwischen den auf der Stirnseite liegenden Abschnitten der Ableiterstreifen 1510 und der Stirnseite liegen und einen direkten elektrischen Kontakt mit der Wickelstirnseite unterbinden.

## Patentansprüche

1. Elektrochemische Energiespeicherzelle (100) mit den Merkmalen:
a. Sie umfasst ein Gehäuse mit einem umlaufenden Gehäusemantel sowie einem ersten und einem zweiten Gehäuseboden (110, 120);
b. Sie umfasst in dem Gehäuse einen zylindrischen Elektroden-Separator-Verbund (150), umfassend mindestens eine bandförmige negative Elektrode (151) und mindestens eine bandförmige positive Elektrode (152) und mindestens einen bandförmigen Separator (153);
c. Die Elektroden (151, 152) umfassen jeweils einen bandförmigen metallischen Stromkollektor (171, 172), der vorzugsweise beidseitig mit einem Elektrodenmaterial (181, 182) beschichtet ist;
d. Bei dem Elektroden-Separator-Verbund (150) handelt es sich um einen Wickel, in dem die Elektroden (151, 152) und der mindestens eine Separator (153) spiralförmig aufgewickelt vorliegen;
e. Der zylindrische Elektroden-Separator-Verbund (150) umfasst eine erste Wickelstirnseite und eine zweite Wickelstirnseite und einen umlaufenden Mantel; und
f. Der zylindrische Elektroden-Separator-Verbund (150) ist in dem Gehäuse axial ausgerichtet, so dass die Wickelstirnseiten in Richtung der Gehäuseböden (110, 120) weisen;
sowie den zusätzlichen Merkmalen:
g. Die Energiespeicherzelle umfasst mindestens zwei metallische Ableiterstreifen (1510, 1520), die an unterschiedlichen Positionen des bandförmigen Stromkollektors (171, 172) von mindestens einer der Elektroden (151, 152) fixiert sind;
h. Die Ableiterstreifen (1510, 1520) einer Elektrode (151, 152) treten alle aus einer der Wickelstirnseiten aus und umfassen einen ersten Abschnitt (1511, 1521) außerhalb und einen zweiten Abschnitt innerhalb des Wickels;
i. Die ersten Abschnitte (1511, 1521) der Ableiterstreifen sind derart abgewinkelt, dass sie flach auf der jeweiligen Wickelstirnseite aufliegen;
j. Die ersten Abschnitte (1511, 1521) der Ableiterstreifen einer Elektrode sind durch Verschweißung mit jeweils einem der Gehäuseböden (110, 120) verbunden;
k. Die Dimensionen der Ableiterstreifen (1510, 1520) und/oder die Positionen, an denen sie an dem bandförmigen Stromkollektor fixiert sind, sind derart gewählt, dass die auf der jeweiligen Wickelstirnseite aufliegenden ersten Abschnitte einander nicht überlappen.

2. Elektrochemische Energiespeicherzelle nach Anspruch 1 mit dem folgenden zusätzlichen Merkmal:
a. Sie umfasst mindestens drei der metallische Ableiterstreifen (1510, 1520) an unterschiedlichen Positionen des bandförmigen Stromkollektors (171, 172), bevorzugt drei bis acht Ableiterstreifen.

3. Elektrochemische Energiespeicherzelle nach Anspruch 1 oder Anspruch 2 mit mindestens einem der folgenden zusätzlichen Merkmale:
a. Die Länge der ersten Abschnitte (1511, 1521) der Ableiterstreifen beträgt maximal 50 %, bevorzugt maximal 25 %, des Durchmessers der Wickelstirnseiten;
b. Einer der ersten Abschnitte (1511, 1521) überdeckt das Zentrum der jeweiligen Wickelstirnseite;
c. Die abgewinkelten ersten Abschnitte (1511, 1521) der Ableiterstreifen bedecken insgesamt mindestens 5 % der Fläche der jeweiligen Wickelstirnseite.

4. Elektrochemische Energiespeicherzelle nach einem der vorhergehenden Ansprüche mit mindestens einem der folgenden zusätzlichen Merkmale:
a. Die abgewinkelten ersten Abschnitte (1511, 1521) der Ableiterstreifen sind über mindestens eine punkt- und/oder mindestens eine linienförmige Schweißverbindung mit dem Gehäuseboden (110, 120) verbunden;
b. Die mindestens eine punkt- und/oder die mindestens eine linienförmige Schweißverbindung durchdringt den Gehäuseboden (110, 120).

5. Elektrochemische Energiespeicherzelle nach einem der vorhergehenden Ansprüche mit mindestens einem der folgenden zusätzlichen Merkmale:
a. Der Stromkollektor (171, 172), an dem die mindestens zwei Ableiterstreifen (1510, 1520) fixiert sind, weist Bereiche auf, die nicht mit Elektrodenaktivmaterial beschichtet sind;
b. Die zweiten Abschnitte der Ableiterstreifen sind jeweils an einem solchen, nicht mit Elektrodenaktivmaterial beschichteten Bereich des Stromkollektors (171, 172) fixiert, insbesondere angeschweißt.

6. Elektrochemische Energiespeicherzelle nach einem der vorhergehenden Ansprüche mit dem folgenden zusätzlichen Merkmal:
a. Die auf der jeweiligen Wickelstirnseite aufliegenden ersten Abschnitte (1511, 1521) der Ableiterstreifen sind gegenüber dieser Wickelstirnseite elektrisch isoliert.

7. Elektrochemische Energiespeicherzelle nach einem der vorhergehenden Ansprüche mit dem folgenden zusätzlichen Merkmal:
a. Die erste Wickelstirnseite und/oder die zweite Wickelstirnseite werden von mindestens einem Längsrand des mindestens einen Separators (153) gebildet.

8. Elektrochemische Energiespeicherzelle nach einem der vorhergehenden Ansprüche mit mindestens einem der folgenden zusätzlichen Merkmale:
a. Die Energiespeicherzelle (100) ist eine Knopfzelle;
b. Das Gehäuse oder zumindest der Gehäusemantel ist zylindrisch ausgebildet;
c. Das Gehäuse umfasst zwei becherförmige Gehäuseteile (101, 102) mit jeweils einem Boden (110, 120), einer umlaufenden Seitenwand und einem Öffnungsrand, von denen eines mit dem Öffnungsrand voran in das andere eingeschoben ist;
d. Die Gehäuseteile (101, 102) sind durch eine ringförmige, elektrisch isolierende Dichtung (103) voneinander getrennt.

9. Elektrochemische Energiespeicherzelle nach einem der vorhergehenden Ansprüche mit mindestens einem der folgenden zusätzlichen Merkmale:
a. Die mindestens zwei metallischen Ableiterstreifen (1520) sind elektrisch mit der mindestens einen positiven Elektrode (152) verbunden und treten alle aus der ersten Wickelstirnseite aus;
b. Die Energiespeicherzelle umfasst mindestens zwei weitere metallische Ableiterstreifen (1510) zur elektrischen Kontaktierung der mindestens einen negativen Elektrode (151);
c. Die mindestens zwei weiteren metallischen Ableiterstreifen (1510) sind an unterschiedlichen Positionen des bandförmigen Stromkollektors der mindestens einen negativen Elektrode fixiert;
d. Die weiteren Ableiterstreifen (1510) treten alle aus der zweiten Wickelstirnseite aus und umfassen einen ersten Abschnitt (1511) außerhalb und einen zweiten Abschnitt innerhalb des Wickels;
e. Die ersten Abschnitte (1511) der weiteren Ableiterstreifen sind derart abgewinkelt, dass sie flach auf der zweiten Wickelstirnseite aufliegen;
f. Die zweiten Abschnitte der weiteren Ableiterstreifen (1510) sind durch Verschweißung mit einem der Gehäuseböden (120) verbunden;
g. Die Dimensionen der weiteren Ableiterstreifen (1510) und/oder die Positionen, an denen sie an dem bandförmigen Stromkollektor fixiert sind, sind derart gewählt, dass die auf der zweiten Wickelstirnseite aufliegenden ersten Abschnitte (1511) der weiteren Ableiterstreifen einander nicht überlappen.

10. Verfahren zur Herstellung einer elektrochemischen Energiespeicherzelle, insbesondere eine elektrochemischen Energiespeicherzelle gemäß einem der Ansprüche 1 bis 9, mit den folgenden Schritten:
a. Bereitstellung eines zylindrischen Elektroden-Separator-Verbundes (150) umfassend mindestens eine bandförmige negative Elektrode (151) und mindestens eine bandförmige positive Elektrode (152) und mindestens einen bandförmigen Separator (153), wobei
- es sich bei dem Elektroden-Separator-Verbund (150) um einen Wickel, in dem die Elektroden und der mindestens eine Separator spiralförmig aufgewickelt vorliegen, handelt,
- der zylindrische Elektroden-Separator-Verbund (150) eine erste Wickelstirnseite und eine zweite Wickelstirnseite und einen umlaufenden Mantel umfasst;
- die Elektroden jeweils einen bandförmigen metallischen Stromkollektor (171, 172), der vorzugsweise beidseitig mit einem Elektrodenmaterial (181, 182) beschichtet ist, umfassen,
- mindestens zwei metallische Ableiterstreifen (1510, 1520) an unterschiedlichen Positionen des bandförmigen Stromkollektors von mindestens einer der Elektroden fixiert sind,
- die Ableiterstreifen einer Elektrode alle aus einer der Wickelstirnseiten austreten und einen ersten Abschnitt (1511, 1521) außerhalb und einen zweiten Abschnitt innerhalb des Wickels umfassen;
b. Abwinkeln der ersten Abschnitte (1511, 1521) der Ableiterstreifen derart, dass sie flach auf der jeweiligen Wickelstirnseite aufliegen und einander nicht überlappen;
c. Bereitstellung von Gehäuseteilen (101, 102) zur Bildung eines Gehäuses, das einen umlaufenden Gehäusemantel sowie einen ersten und einen zweiten Gehäuseboden (110, 120) aufweist;
d. Montage der Energiespeicherzelle sowie des Gehäuses unter Anordnung des Elektroden-Separator-Verbunds (150) derart, dass die Wickelstirnseiten bei geschlossenem Gehäuse in Richtung der Gehäuseböden (110, 120) weisen;
e. Verschweißen der jeweils ersten Abschnitte (1511, 1521) der Ableiterstreifen von mindestens einer der Elektroden mit jeweils einem der Gehäuseböden (110, 120).

11. Verfahren nach Anspruch 10 mit mindestens einem der folgenden zusätzlichen Merkmale:
a. Die Position von mindestens einem der auf der jeweiligen Wickelstirnseite aufliegenden, abgewinkelten ersten Abschnitt (1511, 1521) der Ableiterstreifen wird mittels eines Sensors erfasst;
b. Der mindestens eine der ersten Abschnitte (1511, 1521) der Ableiterstreifen wird mittels eines Lasers oder mittels Widerstandsschweißen mit dem einen der Gehäuseböden (110, 120) verschweißt, wobei die Verschweißung durch den Gehäuseboden hindurch erfolgt.

12. Verfahren nach Anspruch 11 mit mindestens einem der folgenden zusätzlichen Merkmale:
a. Das Gehäuse wird aus zwei becherförmigen Gehäuseteilen (101, 102) gebildet, die jeweils einen Boden, eine umlaufende Seitenwand und einen Öffnungsrand aufweisen;
b. Während der Montage wird der Elektroden-Separator-Verbund (150) in einem der Gehäuseteile platziert, das anschließend mit seinem Öffnungsrand voran in das andere Gehäuseteil eingeschoben wird.

13. Verfahren nach Anspruch 12 mit mindestens einem der folgenden zusätzlichen Merkmale:
a. Die Erfassung der Position von mindestens einem der auf der jeweiligen Wickelstirnseite aufliegenden, abgewinkelten ersten Abschnitte (1511, 1521) der Ableiterstreifen erfolgt nach dem Platzieren des Elektroden-Separator-Verbunds in dem Gehäuseteil, vorzugsweise nach dem Einschieben des Gehäuseteils in das andere Gehäuseteil;

14. Die Erfassung der Position von mindestens einem der auf der jeweiligen Wickelstirnseite aufliegenden, abgewinkelten ersten Abschnitte (1511, 1521) der Ableiterstreifen erfolgt mittels Computertomographie.

15. Verfahren nach Anspruch 12 mit mindestens einem der folgenden zusätzlichen Merkmale:
a. Die Erfassung der Position von mindestens einem der auf der jeweiligen Wickelstirnseite aufliegenden, abgewinkelten ersten Abschnitte (1511, 1521) der Ableiterstreifen erfolgt nach dem Platzieren des Elektroden-Separator-Verbunds (150) in dem Gehäuseteil, aber vor dem Einschieben des Gehäuseteils in das andere Gehäuseteil.
b. Die Erfassung der Position von mindestens einem der auf der jeweiligen Wickelstirnseite aufliegenden, abgewinkelten ersten Abschnitte (1511, 1521) der Ableiterstreifen erfolgt mittels einer Kamera.
